# EUROPÄISCHE PATENTSCHRIFT

(11) **EP 3 015 209 B1**
(45) Veröffentlichungstag und Bekanntmachung des Hinweises auf die Patenterteilung: **22.02.2017**
(21) Anmeldenummer: 14190561.2
(22) Anmeldetag: 27.10.2014
(51) Int. Cl.: B23H 9/00, D04B 35/02, B23H 3/00

(54) **Nadeln oder Platinen für Textilmaschinen sowie Verfahren zur Herstellung einer Nadel oder einer Platine für Textilmaschinen**
Needles or boards for textile machines and method for making a needle or board for textile machines
Aiguilles ou platines pour machines textiles et procédé de fabrication d'une aiguille ou d'une platine pour des machines textiles

(43) Veröffentlichungstag der Anmeldung: 04.05.2016
(73) Patentinhaber: Hugo Kern und Liebers GmbH & Co. KG Platinen- und Federnfabrik, 78713 Schramberg (DE)
(72) Erfinder: Eckmüller, Ulrich, 78713 Schramberg (DE); Brüstle, Jochen, 78713 Schramberg (DE); Staiger, Uwe, 78733 Aichhalden-Rötenberg (DE); Polster, Andreas, 78647 Trossingen (DE)
(74) Vertreter: Westphal, Mussgnug & Partner Patentanwälte mbB

(56) Entgegenhaltungen:
- DE-A1- 3 401 874
- US-A- 3 332 869

## Beschreibung

Die Erfindung betrifft eine Nadel oder eine Platine für Textilmaschinen sowie ein Verfahren zur Herstellung einer Nadel oder einer Platine für Textilmaschinen

Nadeln und Platinen werden in Textilmaschinen, insbesondere Strick- und Wirkmaschinen, verwendet, insbesondere zur Bewegung des Fadens, beispielsweise, um Maschen zu bilden, oder um maschenbildende Elemente zu führen oder zu steuern.

Bekannt sind Nadeln und Platinen für Textilmaschinen, welche einen flachen Basiskörper aufweisen, wobei der Basiskörper zwei im Wesentlichen parallel zueinander angeordnete Seitenflächen und eine die Seitenflächen verbindende Verbindungsfläche aufweist und in wenigstens einer der Seitenflächen und/oder der Verbindungsfläche wenigstens eine Vertiefung angeordnet ist. Die Vertiefung kann dabei innerhalb der Fläche oder auch an den Rand der Fläche angrenzend, beispielsweise in Form von Fasen, Schrägen oder Absetzungen, angeordnet sein. Insbesondere weisen Stricknadeln, beispielsweise Umhängenadeln, derartige Vertiefungen auf, in welche eine Umhängefeder eingesetzt ist.

Bekannt ist es, diese Vertiefungen durch spanabhebende Prozesse, beispielsweise durch Fräsen, herzustellen. Bei einer derartigen Herstellung ergibt sich jedoch am Ende der Vertiefung ein Auslauf, da verfahrensbedingt bei einem Fräsprozess nicht allseits senkrechte Seitenwände der Vertiefung fertigbar sind. Zudem sind weitere Bearbeitungsschritte zum Entgraten erforderlich.

Die DE 34 01 874 A1 schlägt zur Beseitigung dieses Nachteils vor, die Vertiefungen durch Prägeprozesse herzustellen. Dazu werden zunächst Ausstanzungen in den Basiskörper eingebracht, in welche anschließend beim Prägeprozess das verdrängte Material eindringt. Bei Prägeprozessen sind jedoch nur bestimmte Verformungsgrade physikalisch möglich und es können keine Materialien großer Härte bearbeitet werden. Zudem besteht bei Ausstanzungen die Gefahr, dass sich Schmutz, beispielsweise Garnflusen, in diesen absetzt.

Die Aufgabe der Erfindung besteht daher darin, eine Nadel oder eine Platine anzugeben, welche einfacher und präziser herstellbar ist. Weiterhin besteht die Aufgabe der Erfindung darin, ein einfaches und präzises Herstellungsverfahren zur Herstellung einer Nadel oder einer Platine anzugeben.

Die Aufgabe der Erfindung wird gelöst durch eine Nadel oder eine Platine mit den Merkmalen des Patentanspruchs 1 sowie ein Verfahren zur Herstellung einer Nadel oder einer Platine mit den Merkmalen des Patentanspruchs 9.

Vorteilhafte Ausgestaltungen und Weiterbildungen der Erfindung sind in den abhängigen Ansprüchen angegeben.

Die erfindungsgemäße Nadel oder die erfindungsgemäße Platine für Textilmaschinen, welches einen flachen Basiskörper aufweist, wobei der Basiskörper zwei im Wesentlichen parallel zueinander angeordnete Seitenflächen und eine die Seitenflächen verbindende Verbindungsfläche aufweist und in wenigstens einer der Seitenflächen und/oder der Verbindungsfläche wenigstens eine Vertiefung angeordnet ist, zeichnet sich dadurch aus, dass die Vertiefung durch ein elektrochemisches Abtrageverfahren gefertigt ist.

Bei einem elektrochemischen Abtrageverfahren wird zwischen einer Elektrode und dem zu bearbeitenden Werkstück, vorliegend dem Basiskörper-Rohling, ein Stromfluss erzeugt. Die Elektrode wird dem zu bearbeitenden Werkstück angenähert, wobei sich in dem Bearbeitungsspalt eine Elektrolytflüssigkeit befindet. Durch den Elektronenstrom werden Metallionen von dem zu bearbeitenden Werkstück gelöst.

Ein derartiges elektrochemisches Abtrageverfahren ist berührungslos, so dass keine mechanischen Kräfte auf das zu bearbeitende Werkstück übertragen werden. Zudem kann die Form der Elektrode nach Art eines Stempels in das zu bearbeitende Werkstück als Negativ übertragen werden, so dass komplexe Geometrien erstellt werden können. Da die Basiskörper-Rohlinge von Nadeln und Platinen besonders dünn ausgebildet sind, ist ein derartiges Verfahren für sie besonders vorteilhaft, da keine mechanischen Kräfte übertragen werden und trotzdem präzise Vertiefungen ausgebildet werden können. Zudem lassen sich mit diesem Verfahren auch gehärtete Materialen bearbeiten. Da ein elektrochemisches Verfahren keine mechanische Bearbeitung der Oberfläche der Nadel oder der Platine vornimmt, werden Oberflächenstrukturen weniger zerstört und es kann eine größere Verschleißfestigkeit erreicht werden, was insbesondere für Nadeln und Platinen, welche bei Einsatz in den Textilmaschinen hohen mechanischen Belastungen ausgesetzt sind, von Vorteil ist.

Bei vielen elektrochemischen Abtrageverfahren wird für die Dauer des Abtrageprozesses ein konstanter Strom angelegt und die Elektrode mit einem im Wesentlichen konstanten Vorschub auf das zu bearbeitende Werkstück zubewegt. Eine besonders bevorzugte Ausführungsform der Erfindung sieht vor, dass die Vertiefung durch ein PECM-Verfahren (precise electrochemical machining) gefertigt ist. Bei einem PECM-Verfahren wird die Elektrode auf das Werkstück zubewegt, dann ein kurzer Strompuls angelegt und anschließend nach Beendigung des Strompulses die Elektrode wieder von dem Werkstück wegbewegt. Ein derartiges Verfahren erlaubt es, mit kleineren Arbeitsspalten zu arbeiten, um eine bessere Präzision zu erreichen.

Vorzugsweise weisen weder der Basiskörper noch der Basiskörper-Rohling, aus welchem der Basiskörper gefertigt ist, einen oder mehrere Durchbrüche auf. Anders ausgedrückt bedeutet dies, dass die erfindungsgemäße Nadel oder die erfindungsgemäße Platine vollkommen geschlossen ausgebildet ist. Dadurch kann die Gefahr von Schmutzabsetzungen verringert und die Steifigkeit und/oder Stabilität der Nadel oder der Platine verbessert werden. Dies ist insbesondere für Nadeln von Vorteil. Dass derartige Durchbrüche, welche beispielsweise als Ausstanzungen gefertigt werden, entfallen können, vereinfacht zudem den Herstellungsprozess.

Vorzugsweise weist die Vertiefung Seitenwände auf, welche senkrecht zu der Seitenfläche des Basiskörpers und/oder senkrecht zu einer Grundfläche der Vertiefung angeordnet sind. Diese sind mit dem elektrochemischen Verfahren einfach zu fertigen. Eine Vertiefung mit senkrechten Seitenwänden ist unempfindlicher gegen Verschmutzung und kann eine höhere Stabilität aufweisen.

Gemäß einer vorteilhaften Weiterbildung der Erfindung weist der Basiskörper einen Kopf- und einen Fußabschnitt auf, wobei die Vertiefung als Nut ausgebildet ist, welche zum Kopfbereich des Basiskörpers hin offen ausgebildet ist. Derartige Vertiefungen sind insbesondere bei Umhängenadeln von Vorteil, da in derartige Vertiefungen Umhängefedern einsetzbar sind.

Vorzugsweise ist in der Vertiefung ein Vorsprung oder ein Zapfen angeordnet, welcher eine in die Vertiefung eingesetzte Umhängefeder oder ein sonstiges in die Vertiefung eingesetztes Element gegen Verschiebung insbesondere in Längsrichtung der Nadel oder der Platine sichern kann. Dabei ist die Längsrichtung des Vorsprungs oder des Zapfens insbesondere parallel zu den Seitenwänden und senkrecht zur Grundfläche der Vertiefung ausgerichtet. Der Vorsprung oder Zapfen kann freistehend auf der Grundfläche der Vertiefung angeordnet sein, kann aber auch an einer der Seitenwände der Vertiefung angrenzend oder anliegend angeordnet sein. Da der Vorsprung oder der Zapfen vorteilhafterweise ebenfalls mittels des elektrochemischen Abtrageverfahrens hergestellt wird, ist er insbesondere einstückig in der Vertiefung ausgebildet.

Gemäß einer bevorzugten Ausführungsform der Erfindung ist die Nadel als Stricknadel, insbesondere Umhängenadel, für Textilmaschinen, insbesondere für Flachstrickmaschinen, ausgebildet.

Vorzugsweise ist in der Vertiefung eine Umhängefeder, insbesondere mit einem Abschnitt formschlüssig zu der Vertiefung, angeordnet. Gerade bei der Anordnung von Umhängefedern in der Vertiefung ist die Herstellung der Vertiefung mittels eines elektrochemischen Abtrageverfahrens von Vorteil, da auf diese Weise einfach und kostengünstig formschlüssige Verbindungen herstellbar sind.

Das erfindungsgemäße Verfahren zur Herstellung einer Nadel oder einer Platine für Textilmaschinen, welches einen flachen Basiskörper aufweist, wobei der Basiskörper zwei im Wesentlichen parallel zueinander angeordnete Seitenflächen und eine die Seitenflächen verbindende Verbindungsfläche aufweist und in wenigstens einer der Seitenflächen und/oder der Verbindungsfläche wenigstens eine Vertiefung angeordnet ist, zeichnet sich dadurch aus, dass die wenigstens eine Vertiefung durch ein elektrochemisches Abtrageverfahren gefertigt wird.

Ein derartiges elektrochemisches Abtrageverfahren ist berührungslos, so dass keine mechanischen Kräfte auf das zu bearbeitende Werkstück übertragen werden. Zudem kann die Form der Elektrode nach Art eines Stempels in das zu bearbeitende Werkstück als Negativ übertragen werden, so dass komplexe Geometrien erstellt werden können. Da die Basiskörper-Rohlinge von Nadeln und Platinen besonders dünn ausgebildet sind, ist ein derartiges Verfahren für sie besonders vorteilhaft, da keine mechanischen Kräfte übertragen werden und trotzdem präzise Vertiefungen ausgebildet werden können. Zudem lassen sich mit diesem Verfahren auch gehärtete Materialen bearbeiten. Da ein elektrochemisches Verfahren keine mechanische Bearbeitung der Oberfläche der Nadel oder der Platine vornimmt, werden Oberflächenstrukturen weniger zerstört und es kann eine größere Verschleißfestigkeit erreicht werden, was insbesondere für Nadeln und Platinen, welche bei Einsatz in den Textilmaschinen hohen mechanischen Belastungen ausgesetzt sind, von Vorteil ist.

Bei vielen elektrochemischen Abtrageverfahren wird für die Dauer des Abtrageprozesses ein konstanter Strom angelegt und die Elektrode mit einem im Wesentlichen konstanten Vorschub auf das zu bearbeitende Werkstück zubewegt. Eine besonders bevorzugte Ausführungsform der Erfindung sieht vor, dass das elektrochemische Abtrageverfahren ein PECM-Verfahren (precise electrochemical machining) ist. Bei einem PECM-Verfahren wird die Elektrode auf das Werkstück zubewegt, dann ein kurzer Strompuls angelegt und anschließend die Elektrode wieder von dem Werkstück wegbewegt. Ein derartiges Verfahren erlaubt es, mit kleineren Arbeitsspalten zu arbeiten, um eine bessere Präzision zu erreichen.

Eine bevorzugte Ausführungsform der Erfindung sieht vor, dass das elektrochemische Abtrageverfahren folgende Schritte aufweist:
a) Bereitstellen eines Basiskörper-Rohlings,
b) Zuführen von Elektrolytflüssigkeit,
c) Annähern der Elektrode an die Oberfläche des Basiskörper-Rohlings,
d) Anlegen eines Strompulses,
e) Entfernen der Elektrode von der Oberfläche des Basiskörper-Rohlings,
f) Entfernen des verschmutzen Elektrolyts,
g) falls die gewünschte Form des Basiskörpers noch nicht erreicht ist, Wiederholen der Schritte b) bis f).

Die Erfindung wird anhand der nachfolgenden Figuren ausführlich erläutert. Es zeigen
- Figur 1a: einen Ausschnitt einer schematischen Seitenansicht eines ersten Ausführungsbeispiels einer erfindungsgemäßen Nadel,
- Figur 1b: einen Längsschnitt entlang der Linie A-A durch das Ausführungsbeispiel gemäß Figur 1a,
- Figur 2: einen Ausschnitt einer schematischen Seitenansicht eines zweiten Ausführungsbeispiels einer erfindungsgemäßen Nadel,
- Figur 3: einen Ausschnitt einer schematischen Seitenansicht eines dritten Ausführungsbeispiels einer erfindungsgemäßen Nadel,
- Figur 4: einen Ausschnitt einer schematischen Seitenansicht eines vierten Ausführungsbeispiels einer erfindungsgemäßen Nadel,
- Figur 5: einen Ausschnitt einer schematischen Seitenansicht eines ersten Ausführungsbeispiels einer erfindungsgemäßen Platine und
- Figur 6: einen Ausschnitt einer schematischen Seitenansicht eines zweiten Ausführungsbeispiels einer erfindungsgemäßen Platine.

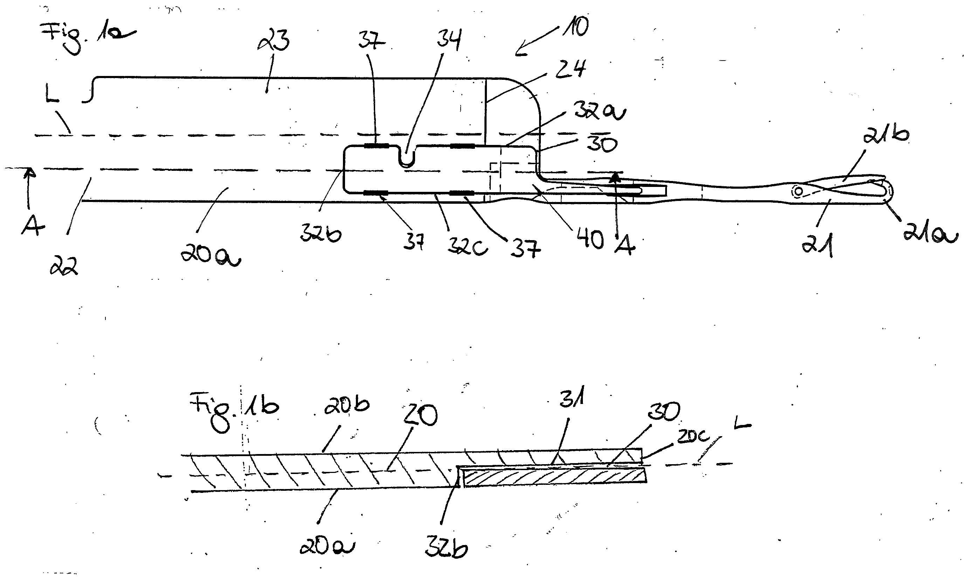

Die Figuren 1a und 1b zeigen zwei Ansichten eines ersten Ausführungsbeispiels einer erfindungsgemäßen Nadel 10. Die Nadel 10 weist einen flachen Basiskörper 20 mit zwei im Wesentlichen parallel zueinander ausgerichteten Seitenflächen 20a, 20b auf, welche über eine Verbindungsfläche 20c, die insbesondere umlaufend ausgebildet ist, miteinander verbunden sind. Der Basiskörper 20 weist eine Längsachse L auf. Der Basiskörper 20 weist einen Kopfbereich 21, welcher insbesondere einen Haken 21a und eine Zunge 21b aufweist, und einen Fußbereich 22 auf, über welchen die Bewegung der Nadel 10 in einer Textilmaschine gesteuert werden kann. Der Fußbereich 22 ist in den Figuren nicht vollständig dargestellt. Zwischen dem Kopfbereich 21 und dem Fußbereich 22 ist ein mittlerer Bereich 23 angeordnet. Der mittlere Bereich 23 weist in seinem dem Kopfbereich 21 zugewandten Bereich eine kleinere Dicke auf als in seinem dem Fußbereich 22 zugewandten Bereich, wobei als Dicke der Abstand zwischen den beiden Seitenflächen 20a, 20b anzusehen ist. Dadurch ist der dem Kopfbereich 21 zugewandte Bereich gegenüber dem dem Fußbereich 22 zugewandten Bereich abgesetzt. Die Verringerung der Dicke erfolgt an einer Kante 24.

Der Basiskörper 20 weist in einer der Seitenflächen 20a, 20b oder der Verbindungsfläche 20c, beispielsweise der Seitenfläche 20a, dort insbesondere in dem mittleren Bereich 23, eine Vertiefung 30 auf. Dabei reicht die Vertiefung 30 nicht bis zur gegenüberliegenden Seitenfläche 20b und bildet somit keinen Durchbruch. Die Vertiefung 30 kann als Nut ausgebildet sein und kann zum Kopfbereich 21 offen ausgebildet sein. Die Vertiefung 30 kann aber auch derart innerhalb der Seitenfläche 20b angeordnet sein, dass sie zu allen Seiten geschlossen ist, oder kann alternativ nicht nur zu einer, sondern auch zu zwei oder drei Seiten hin offen ausgebildet sein, beispielsweise in Form einer Fase oder Absetzung.

Die Vertiefung weist insbesondere eine Grundfläche 31 und drei Seitenwände 32a, 32b, 32c auf. Dabei sind insbesondere die Seitenwände 32a, 32c zumindest abschnittsweise parallel zueinander ausgerichtet und verlaufen im Wesentlichen parallel zur Längsachse L, während die Seitenwand 32b insbesondere quer zur Längsachse L verläuft und die zum Fußbereich 22 gerichtete Wand der Vertiefung 30 bildet. Die Seitenwände 32a, 32b, 32c sind senkrecht zur Grundfläche 31 der Vertiefung 30 und senkrecht zur Seitenfläche 20a des Basiskörpers 20 ausgerichtet.

In der Vertiefung 30 kann eine Umhängefeder 40 angeordnet sein. Diese ist insbesondere mit einem Abschnitt formschlüssig in der Vertiefung 30 angeordnet und kann mit einem weiteren Abschnitt in Richtung des Kopfbereichs 21 aus der Vertiefung 30 durch die offene Seitenwand herausragen.

Um die Umhängefeder 40 oder ein sonstiges in der Vertiefung 30 angeordnetes Element gegen Bewegung parallel zur Längsachse L des Basiskörpers 20 zu sichern, kann in der Vertiefung 30 ein Vorsprung 34 angeordnet sein. Dieser erstreckt sich insbesondere von der Grundfläche 31 der Vertiefung bis zur Seitenfläche 20a des Basiskörpers 20. Er ist insbesondere zylindrisch mit beliebiger Grundfläche ausgebildet, wobei die Grundfläche in der Grundfläche 31 der Vertiefung 30 und die Deckfläche vorteilhafterweise in oder parallel zu der Ebene, in welcher die Seitenfläche 20a liegt, angeordnet sind. Die Längsachse des Zylinders verläuft vorteilhafterweise senkrecht zur Grundfläche 31 der Vertiefung 30. Der Vorsprung 34 kann an einer der Seitenwände der Vertiefung 30, beispielsweise der Seitenwand 32a, direkt anliegen und insbesondere einstückig an dieser angeordnet sein.

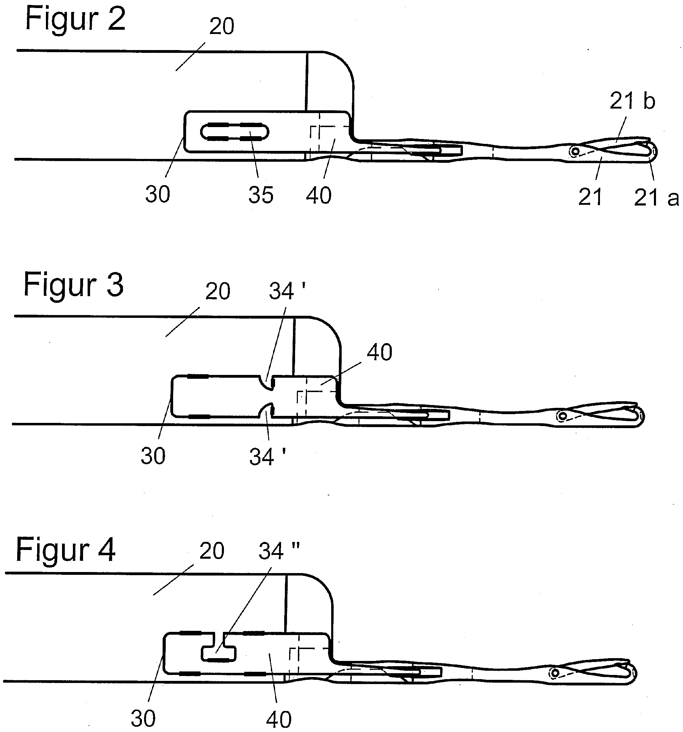

Die weiteren in den Figuren 2, 3 und 4 dargestellten Ausführungsbeispiele unterscheiden sich lediglich in der Form des Vorsprungs 34 von dem in den Figuren 1a und 1b dargestellten Ausführungsbeispiel. Figur 3 zeigt zwei Vorsprünge 34', von welchen einer an der Seitenwand 32a und einer gegenüberliegend an der Seitenwand 32c angeordnet ist, wobei die Vorsprünge 34' in etwa keilförmige oder kreissegmentförmige Grundflächen aufweisen. Das Ausführungsbeispiel gemäß Figur 4 zeigt einen Vorsprung 34'' mit der Grundfläche in Form eines T. Das in Figur 2 dargestellte Ausführungsbeispiel weist anstelle des Vorsprungs 34 einen freistehenden Zapfen 35 auf, welcher an der Grundfläche 31 der Vertiefung 30 angeordnet ist, insbesondere ohne direkten Kontakt zu einer der Seitenwände 32a, 32b, 32c.

Der Zapfen 35 kann wie in Figur 2 dargestellt eine längliche oder ovale Grundfläche aufweisen, grundsätzlich sind aber auch kreisförmige oder beliebig geformte Grundflächen möglich.

Um die Umhängefeder 40 oder ein sonstiges in der Vertiefung 30 angeordnetes Element gegen Herausfallen aus der Vertiefung 30 zu sichern, kann die Umhängefeder 40 oder das sonstige in der Vertiefung 30 angeordnete Element durch eine oder mehrere Verstemmungen 37 wie in den Figuren dargestellt oder mittels Laserschweißen nach Einlegen in die Vertiefung 30 fixiert werden.

Die Vertiefung 30 ist durch ein elektrochemisches Abtrageverfahren gefertigt. Dabei wird vorteilhafterweise ein PECM-Verfahren verwendet, um eine möglichst hohe Präzision der Vertiefung 30 zu ermöglichen.

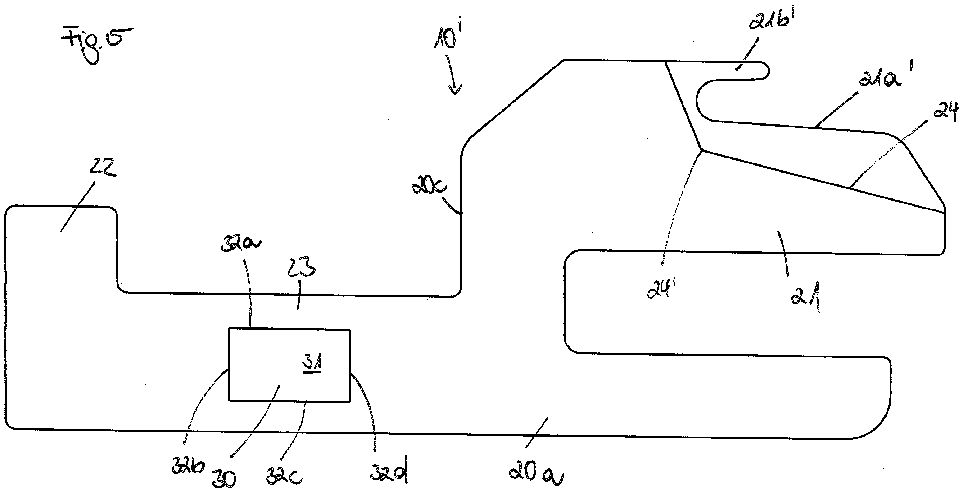

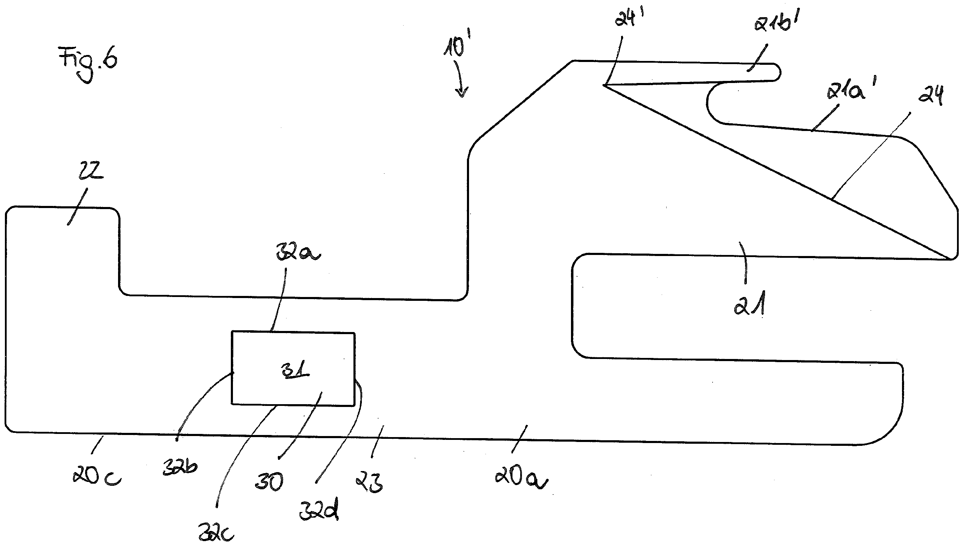

In den Figuren 5 und 6 sind zwei Ausführungsbeispiele je einer erfindungsgemäßen Platine 10' dargestellt, welche wie die Nadel 10 einen flachen Basiskörper 20 mit zwei im Wesentlichen parallel zueinander ausgerichteten Seitenflächen 20a, 20b auf, welche über eine Verbindungsfläche 20c, die insbesondere umlaufend ausgebildet ist, miteinander verbunden sind. Gleiche oder funktionsgleiche Teile sind mit gleichen Bezugsziffern wie bei der Nadel bezeichnet. Die Nadeln 10 und die Platinen 10' unterscheiden sich im Wesentlichen in der Form des Basiskörpers. Insbesondere weist der Kopfbereich 21 der Platine keinen Haken 21a und keine Zunge 21b auf, sondern weist eine fadenberührende Kante 21a' auf, auf welcher ein Faden anliegt und welche beispielsweise als Abschlagkante fungieren kann. Oberhalb der fadenberührenden Kante 21a' kann ein Vorsprung 21b' angeordnet sein, welcher zum Niederhalten des Fadens verwendet werden kann. In dem Kopfbereich 21 kann ebenfalls wie bei der Nadel ein abgesetzter Bereich vorhanden sein, der über eine Kante 24 abgesetzt ist und eine geringere Dicke als der übrige Teil des Basiskörpers 20 aufweist. Während die Kante 24 bei den in den Figuren 1 bis 4 dargestellten Nadeln 10 als eine ebene Kante 24 ausgebildet war, kann die Kante 24 der Platinen 10' wenigstens einen oder auch mehrere Knicke 24' aufweisen, insbesondere in einem stumpfen Winkel zwischen 90° und 180° wie in dem in Figur 5 dargestellten Ausführungsbeispiel oder in einem spitzen Winkel zwischen 0° und 90° wie in dem in Figur 6 dargestellten Ausführungsbeispiel gezeigt. Derartige Absetzungen, insbesondere mit spitzen Winkeln, lassen sich nur sehr ungenau mit spanabhebenden Verfahren wie beispielsweise Fräsen herstellen und können mit dem nachfolgend beschriebenen PECM-Verfahren besonders präzise gefertigt werden.

Der Basiskörper 20 der in Figur 5 und 6 dargestellten Platinen weist beispielsweise der Seitenfläche 20a, dort insbesondere in dem mittleren Bereich 23, eine Vertiefung 30 auf. Dabei reicht die Vertiefung 30 nicht bis zur gegenüberliegenden Seitenfläche 20b und bildet somit keinen Durchbruch. Die dargestellte Vertiefung 30 ist derart innerhalb der Seitenfläche 20a angeordnet sein, dass sie zu allen Seiten geschlossen ist. Selbstverständlich sind auch bei den Platinen 10' Varianten der Vertiefung 30 wie bei der Nadel 10 denkbar.

Die Vertiefung weist insbesondere eine Grundfläche 31 und vier Seitenwände 32a, 32b, 32c, 32d auf. Dabei sind insbesondere die Seitenwände 32a, 32c zumindest abschnittsweise parallel zueinander ausgerichtet und verlaufen im Wesentlichen parallel zur Längsachse L, während die Seitenwände 32b, 32d insbesondere quer zur Längsachse L verlaufen. Die Seitenwände 32a, 32b, 32c, 32d sind senkrecht zur Grundfläche 31 der Vertiefung 30 und senkrecht zur Seitenfläche 20a des Basiskörpers 20 ausgerichtet. Die Form der Grundfläche 31 muss selbstverständlich nicht rechteckig ausgebildet sein, sondern kann beliebige Formen annehmen.

Auch die Vertiefung 30 der Platine 10' ist durch ein elektrochemisches Abtrageverfahren gefertigt. Dabei wird vorteilhafterweise ein PECM-Verfahren verwendet, um eine möglichst hohe Präzision der Vertiefung 30 zu ermöglichen.

Um den Basiskörper 20 sowohl der Nadel 10 als auch der Platine 10' in einem PECM-Verfahren fertigen zu können, wird zunächst ein Basiskörper-Rohling bereitgestellt, welcher beispielsweise durch Ausstanzen aus einem Flachmaterial, beispielsweise einem Metallband, gefertigt wird. Der Basiskörper-Rohling wird in einer geeigneten Vorrichtung in einer Bearbeitungsposition in der Nähe einer Elektrode fixiert. In den Bereich zwischen dem Basiskörper-Rohling und der Elektrode wird Elektrolytflüssigkeit zugeführt. Die Elektrode wird anschließend in eine Bearbeitungsposition an den Basiskörper-Rohling angenähert. In dieser Position wird ein Strompuls zwischen der Elektrode, welche vorteilhafterweise als Kathode fungiert, und dem Basiskörper-Rohling, welcher vorteilhafterweise als Anode fungiert, angelegt. Dabei fließt zwischen Anode und Kathode ein Strom, welcher Metallionen von dem Basiskörper-Rohling löst und somit eine Struktur in dem Basiskörper-Rohling ausbildet. Nach Beenden des Strompulses wird die Elektrode wieder von dem Basiskörper-Rohling entfernt und die verschmutzte Elektrolytflüssigkeit entfernt. Um die gewünschte Form der Vertiefung 30 in dem Basiskörper 20 zu erhalten, wird dieser Prozess in der Regel einige Male wiederholt. Die Bearbeitungsposition der Elektrode wird dabei insbesondere bei jedem Strompuls weiter an den Basiskörper-Rohling angenähert, beispielsweise mit einem konstanten Vorschub. Sobald die gewünschte Form der Vertiefung 30 erreicht ist, kann der Basiskörper 20 entnommen und gegebenenfalls weiterverarbeitet werden.

Auf die gleiche Weise kann auch die geringere Dicke in dem dem Kopfbereich 21 zugewandten Bereich des mittleren Bereichs 23 des Basiskörpers 20 der Nadel 10 oder in dem Kopfbereich 21 der Platine 10' in den Basiskörper-Rohling eingebracht werden, wobei die Kante 24 durch das elektrochemische Verfahren, insbesondere das PECM-Verfahren, als senkrecht zu den Seitenflächen 20a, 20b ausgerichtete Fläche hergestellt werden kann. Werkzeugbedingte Ausläufe, die beispielsweise beim Fräsen derartiger Absetzungen entstehen würden, können vermieden werden, so dass einerseits die Kante 24 präziser gefertigt werden und andererseits der Basiskörper 20 insgesamt stabiler ausgebildet werden kann.

### Bezugszeichenliste

- 10: Nadel
- 10': Platine
- 20: Basiskörper
- 20a: Seitenfläche
- 20b: Seitenfläche
- 20c: Verbindungsfläche
- 21: Kopfbereich
- 21a: Haken
- 21b: Zunge
- 21a': fadenberührende Kante
- 21b: Vorsprung
- 22: Fußbereich
- 23: mittlerer Bereich
- 24: Kante
- 24': Knick
- 30: Vertiefung
- 31: Grundfläche
- 32a: Seitenwand
- 32b: Seitenwand
- 32c: Seitenwand
- 32d: Seitenwand
- 34: Vorsprung
- 34': Vorsprung
- 34'': Vorsprung
- 35: Zapfen
- 37: Verstemmung
- 40: Umhängefeder
- L: Längsrichtung

## Patentansprüche

1. Nadel (10) oder Platine (10') für Textilmaschinen, welche einen flachen Basiskörper (20) aufweist, wobei der Basiskörper (20) zwei im Wesentlichen parallel zueinander angeordnete Seitenflächen (20a, 20b) und eine die Seitenflächen (20a, 20b) verbindende Verbindungsfläche (20c) aufweist und in wenigstens einer der Seitenflächen (20a) und/oder der Verbindungsfläche wenigstens eine Vertiefung (30) angeordnet ist,
**dadurch gekennzeichnet, dass** die Vertiefung (30) durch ein elektrochemisches Abtrageverfahren gefertigt ist.

2. Nadel oder Platine nach einem der vorhergehenden Ansprüche,
**dadurch gekennzeichnet, dass** die Vertiefung (30) durch ein PECM-Verfahren gefertigt ist.

3. Nadel oder Platine nach Anspruch 1 oder 2,
**dadurch gekennzeichnet, dass** weder der Basiskörper (20) noch der Basiskörper-Rohling, aus welchem der Basiskörper (20) gefertigt ist, einen oder mehrere Durchbrüche aufweist.

4. Nadel oder Platine nach einem der vorhergehenden Ansprüche,
**dadurch gekennzeichnet, dass** die Vertiefung (30) Seitenwände (32a, 32b, 32c, 32d) aufweist, welche senkrecht zu der Seitenfläche (20a) des Basiskörpers (20) und/oder senkrecht zu einer Grundfläche (31) der Vertiefung (30) angeordnet sind.

5. Nadel oder Platine nach einem der vorhergehenden Ansprüche,
**dadurch gekennzeichnet, dass** der Basiskörper (20) einen Kopfbereich (21) und einen Fußbereich (22) aufweist und die Vertiefung (30) als Nut ausgebildet ist, welche zum Kopfbereich (21) des Basiskörpers (20) hin offen ausgebildet ist.

6. Nadel oder Platine nach einem der vorhergehenden Ansprüche,
**dadurch gekennzeichnet, dass** in der Vertiefung (30) ein Vorsprung (34, 34', 34'') oder ein Zapfen (35) angeordnet ist.

7. Nadel oder Platine nach einem der vorhergehenden Ansprüche,
**dadurch gekennzeichnet, dass** die Nadel (10) als Stricknadel, insbesondere Umhängenadel, für Textilmaschinen, insbesondere für Flachstrickmaschinen, ausgebildet ist.

8. Nadel oder Platine nach einem der vorhergehenden Ansprüche,
**dadurch gekennzeichnet, dass** in der Vertiefung (30) eine Umhängefeder (40), insbesondere mit einem Abschnitt formschlüssig zu der Vertiefung (30), angeordnet ist.

9. Verfahren zur Herstellung einer Nadel (10) oder Platine (10') für Textilmaschinen, welche einen flachen Basiskörper (20) aufweist, wobei der Basiskörper (20) zwei im Wesentlichen parallel zueinander angeordnete Seitenflächen (20a, 20b) und eine die Seitenflächen (20a, 20b) verbindende Verbindungsfläche (20c) aufweist und in wenigstens einer der Seitenflächen (20a) und/oder der Verbindungsfläche wenigstens eine Vertiefung (30) angeordnet ist, wobei die wenigstens eine Vertiefung (30) durch ein elektrochemisches Abtrageverfahren gefertigt wird.

10. Verfahren nach Anspruch 9,
**dadurch gekennzeichnet, dass** das elektrochemische Abtrageverfahren ein PECM-Verfahren ist.

11. Verfahren nach Anspruch 9 oder 10,
**dadurch gekennzeichnet, dass** das elektrochemische Abtrageverfahren folgende Schritte aufweist:
a) Bereitstellen eines Basiskörper-Rohlings,
b) Zuführen von Elektrolytflüssigkeit,
c) Annähern der Elektrode an die Oberfläche des Basiskörper-Rohlings,
d) Anlegen eines Strompulses,
e) Entfernen der Elektrode von der Oberfläche des Basiskörper-Rohlings,
f) Entfernen des verschmutzen Elektrolyts,
g) falls die gewünschte Form des Basiskörpers (20) noch nicht erreicht ist, Wiederholen der Schritte b) bis f).

## Claims

1. Needle (10) or sinker (10') for textile machines which has a flat base element (20), wherein the base element (20) has two side faces (20a, 20b), arranged essentially parallel to one another, and a connecting surface (20c) that connects the side faces (20a, 20b), and arranged in at least one of the side faces (20a) and/or connecting surface is at least one indentation (30),
**characterised in that** the indentation (30) is produced by an electrochemical machining method.

2. Needle or sinker according to one of the preceding claims,
**characterised in that** the indentation (30) is produced by a PECM method.

3. Needle or sinker according to claim 1 or 2,
**characterised in that** neither the base element (20) nor the base element blank from which the base element (20) is produced has one or more openings.

4. Needle or sinker according to one of the preceding claims,
**characterised in that** the indentation (30) has side walls (32a, 32b, 32c, 32d) which are arranged perpendicular to the side face (20a) of the base element (20) and/or perpendicular to a base area (31) of the indentation (30).

5. Needle or sinker according to one of the preceding claims,
**characterised in that** the base element (20) has a head section (21) and a foot section (22), and the indentation (30) is designed as a groove which is designed to be open towards the head section (21) of the base element (20).

6. Needle or sinker according to one of the preceding claims,
**characterised in that** a projection (34, 34', 34") or a tappet (35) is arranged in the indentation (30).

7. Needle or sinker according to one of the preceding claims,
**characterised in that** the needle (10) is designed as a knitting needle, in particular a transfer needle, for textile machines, in particular for flat-bed knitting machines.

8. Needle or sinker according to one of the preceding claims,
**characterised in that** a transfer spring (40), in particular with a section that is form-fitting with the indentation (30), is arranged in the indentation (30).

9. Method for manufacturing a needle (10) or sinker (10') for textile machines which has a flat base element (20), wherein the base element (20) has two side faces (20a, 20b), arranged essentially parallel to one another, and a connecting surface (20c) that connects the side faces (20a, 20b), and at least one indentation (30) is arranged in at least one of the side faces (20a) and/or the connecting surface, wherein the at least one indentation (30) is produced by an electrochemical machining method.

10. Method according to claim 9,
**characterised in that** the electrochemical machining method is a PECM method.

11. Method according to claim 9 or 10,
**characterised in that** the electrochemical machining method has the following steps:
a) provision of a base element blank,
b) supply of electrolyte fluid,
c) approach of the electrode to the surface of the base element blank,
d) application of a current pulse,
e) removal of the electrode from the surface of the base element blank,
f) removal of the contaminated electrolyte,
g) if the desired shape of the base element (20) has not yet been achieved, repetition of the steps b) to f).

## Revendications

1. Aiguille (10) ou platine (10') destinée à des machines textiles comportant un corps de base (20) plat, ce corps de base (20) comprenant deux faces latérales (20a, 20b) essentiellement parallèles et une face de liaison (20c) reliant les faces latérales, et, dans au moins l'une des faces latérales (20a) et/ou dans la face de liaison étant formée au moins une cavité (30),
**caractérisée en ce que**
la cavité (30) est obtenue par un procédé de décapage électrochimique.

2. Aiguille ou platine conforme à la revendication précédente,
**caractérisée en ce que**
la cavité (30) est obtenue par un procédé PECM.

3. Aiguille ou platine conforme à la revendication 1 ou 2,
**caractérisée en ce que**
ni le corps de base (20), ni l'ébauche de ce corps de base à partir de laquelle est obtenu ce corps de base (20) ne comprend un ou plusieurs évidements.

4. Aiguille ou platine conforme à l'une des revendications précédentes,
**caractérisée en ce que**
la cavité (30) comporte des parois latérales (32a, 32b, 32c, 32d) qui sont perpendiculaires à la face latérale (20a) du corps de base (20) et/ou perpendiculaires à la face de fond (31) de la cavité (30).

5. Aiguille ou platine conforme à l'une des revendications précédentes,
**caractérisée en ce que**
le corps de base (20) a une zone de tête (21) et une zone de pied (22), et la cavité (30) est réalisée sous la forme d'une rainure qui est ouverte vers la zone de tête (21) du corps de base (20).

6. Aiguille ou platine conforme à l'une des revendications précédentes,
**caractérisée en ce que**
dans la cavité (30) est installée une saillie (34, 34', 34") ou un tourillon (35).

7. Aiguille ou platine conforme à l'une des revendications précédentes,
**caractérisée en ce que**
l'aiguille (10) est réalisée sous la forme d'une aiguille à tricoter, en particulier d'une aiguille de transfert pour des machines textiles, en particulier des métiers à tricoter à plat.

8. Aiguille ou platine conforme à l'une des revendications précédentes,
**caractérisée en ce que**
dans la cavité (30) est installé un ressort de transfert (40) en particulier ayant un segment lié par une liaison par la forme avec la cavité (30).

9. Procédé d'obtention d'une aiguille (10) ou d'une platine (10') pour des machines textiles comprenant un corps de base plat (20), ce corps de base (20) ayant deux faces latérales essentiellement parallèles (20a, 20b) et une face de liaison (20c) reliant les faces latérales (20a, 20b) et dans au moins l'une des faces latérales (20a) et/ou la face de liaison est formée au moins une cavité (30), cette cavité (30) étant obtenue par un procédé de décapage électrochimique.

10. Procédé conforme à la revendication 9,
**caractérisé en ce que**
le procédé de décapage électrochimique est un procédé PECM.

11. Procédé conforme à la revendication 9 ou 10,
**caractérisé en ce que**
le procédé de décapage électrochimique comprend les étapes suivantes consistant à :
a) se procurer une ébauche de corps de base,
b) fournir un électrolyte fluide,
c) approcher les électrodes de la surface de l'ébauche de corps de base,
d) appliquer une impulsion de courant,
e) éloigner les électrodes de la surface de l'ébauche de corps de base,
f) éliminer l'électrolyte encrassé,
g) si la forme souhaitée du corps de base (20) n'est pas encore obtenue, recommencer les étapes b) à f).
